Europäisches Patentamt

European Patent Office

Office européen des brevets

(11) Veröffentlichungsnummer: **0 441 466 A2**

# (12) EUROPÄISCHE PATENTANMELDUNG

(21) Anmeldenummer: 91250031.1

(22) Anmeldetag: 06.02.91

(51) Int. Cl.5: **F16L 59/14**, F01N 7/14

(30) Priorität: 08.02.90 DE 4004072

(43) Veröffentlichungstag der Anmeldung:
14.08.91 Patentblatt 91/33

(84) Benannte Vertragsstaaten:
**DE ES FR GB IT**

(71) Anmelder: **MANNESMANN Aktiengesellschaft**
**Mannesmannufer 2**
**W-4000 Düsseldorf 1(DE)**

(72) Erfinder: **Vogt, Gerd, Dr.**
**Brucknerstrasse 18**

**W-4005 Meerbusch-Strümp(DE)**
Erfinder: **Becker, Ulrich, Dr.-Ing.**
**Hagelkreuzstrasse 209**
**W-4100 Duisburg 11(DE)**
Erfinder: **Janssen, Manfred, Dr. Ing.**
**Moerser Strasse 398**
**W-4150 Krefeld(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) **Doppelwandhohlkörper mit Zwischenlage und Verfahren zur Herstellung desselben.**

(57) Die Erfindung betrifft einen Doppelwandhohlkörper mit einem inneren und äußeren Hohlkörper aus einem metallischen Werkstoff und einer dicht am inneren Hohlkörper und am äußeren Hohlkörper anliegenden Zwischenlage. Um einen verbesserten Doppelwandhohlkörper anzugeben, bei dem die herkömmlichen Nachteile vermieden werden und der besonders als schalldämmendes Konstruktionselement im Kraftfahrzeugbau geeignet ist, wird vorgeschlagen, daß der kraftschlüssig mit dem äußeren Hohlkörper (5) verbundene innere Hohlkörper (2) über den ganzen, Umfang vom äußeren Hohlkörper (5) durch die Zwischenlage (3) aus einem nichtmetallischen, schalldämmenden Werkstoff getrennt ist und mindestens über eine Abschnittslänge (6,7) des Doppelwandhohlkörpers (1) die beiden Hohlkörper (2,5) ohne Zwischenlage (3) direkt zur Anlage kommen.

EP 0 441 466 A2

## DOPPELWANDHOHLKÖRPER MIT ZWISCHENLAGE UND VERFAHREN ZUR HERSTELLUNG DESSELBEN

Die Erfindung betrifft einen Doppelwandhohlkörper gemäß dem Gattungsbegriff des Anspruches 1 sowie ein Verfahren zur Herstellung desselben. Ein gattungsmäßiger Doppelwandhohlkörper ist aus der DE-PS 37 12 193 bekannt. Es besteht aus einem Innenrohr und einem Außenrohr, die mit Abstand so angeordnet sind, daß sie einen Ringraum bilden, in welchem Keramikpulver im Sinne eines Schallschutzes angeordnet ist. Das Außenrohr besteht gegenüber dem Innenrohr aus einem weniger temperaturfesten Stahl und ist an seinen eingezogenen Enden mit dem Innenrohr gasdicht verbunden. Nachteilig bei diesem Vorschlag ist die erforderliche Einfülltechnik des Keramikpulvers, die der Massenfertigung großer Stückzahlen hinderlich im Wege ist. Das vorgeschlagene Doppelwandrohr ist auch nicht geeignet als Konstruktionselement zur Übertragung von Kräften und Drehmomenten.

In der deutschen Offenlegungsschrift 23 55 126 ist ein Abgasrohr vorgeschlagen worden, das ebenfalls ein Innenrohr und ein Außenrohr mit einer dazwischenliegenden Isolierschicht aufweist. Vorzugsweise besteht das Isoliermaterial aus Aluminium-Silikat-Keramik. Auch dieses Doppelwandrohr ist nicht geeignet größere Kräfte oder Drehmomente zu übertragen.

Aufgabe der Erfindung ist es, einen verbesserten Doppelwandhohlkörper anzugeben, der als schalldämmendes Konstruktionselement im Kraftfahrzeugbau für eine Massenfertigung geeignet ist und größere Kräfte bzw. Drehmomente übertragen kann.

Diese Aufgabe wird mit den im kennzeichnenden Teil des Anspruches 1 angegebenen Merkmalen gelöst. Vorteilhafte Weiterbildungen sind in den Unteransprüchen festgelegt, ebenso ein Verfahren zur Herstellung eines erfindungsgemäßen Doppelwandhohlkörpers.

Der erfindungsgemäße Doppelwandhohlkörper zeichnet sich dadurch aus, daß durch einen kraftschlüssigen Verbund des inneren mit dem äußeren Hohlkörper die Zwischenlage aus dem nichtmetallischen, schalldämmenden Werkstoff über den ganzen Umfang den inneren vom äußeren Hohlkörper trennt. Das

Querschnittsprofil des inneren bzw. des äußeren Hohlkörpers kann im Prinzip beliebig sein und ist in erster Linie abhängig vom jeweiligen Verwendungszweck eines solchen Doppelwandhohlkörpers. Vorzugsweise ist der Querschnitt kreisrund, da die Erzeugung solcher Hohlkörper kostengünstig und die Herstellung eines Doppelwandrohres besonders einfach ist.

Der erfindungsgemäße Doppelwandhohlkörper hat den Vorteil, daß durch den Wegfall der die Zwischenlage durchsetzenden Schweißnaht man in der Auswahl des bestmöglichen Dämmstoffes mehr Spielraum hat, da man auf eine Schweißverträglichkeit keine Rücksicht nehmen muß. Zum anderen wird durch den kraftschlüssigen Verbund ein durchgehender langer Abschnitt gebildet, der durch keine metallische Brücke unterbrochen ist und damit die Schalldämmung besonders wirksam ist.

Zur Herstellung des bereits beschriebenen Doppelwandhohlkörpers wird ein Verfahren vorgeschlagen, bei dem zuerst die Zwischenlage auf den inneren Hohlkörper aufgebracht und anschließend dieser in den äußeren Hohlkörper eingeführt und abschließend mindestens einer der beiden Hohlkörper plastisch so stark verformt wird, daß er am anderen Hohlkörper kraftschlüssig zur Anlage kommt. Die Art der Aufbringung der Zwischenlage auf den inneren Hohlkörper kann in verschiedener Art und Weise erfolgen. Eine der Möglichkeiten ist, die Zwischenlage in Form eines Schlauches auf den inneren Hohlkörper aufzuziehen. Kostenmäßig günstiger ist die Verwendung eines Flachproduktes für die Zwischenlage und das Einwickeln des inneren Hohlkörpers in die auf Maß vorgeschnittene Zwischenlage. Je nach Art des Dämmstoffes ist eine Verbindung mit dem inneren Hohlkörper über Wärme oder über einen Kleber möglich. Die nach dem Einschieben des mit der Zwischenlage versehenen inneren Hohlkörpers in den ein größeres Innenmaß aufweisenden äußeren Hohlkörper erforderliche Aufweitung kann hydraulisch oder mechanisch, Z. B. durch das Hindurchschieben eines aufweitenden Innenwerkzeuges erfolgen, wobei im Bereich des zwischenlagefreien Abschnittes eine zusätzliche Aufweitung erforderlich ist. Das hydraulische Aufweiten ist immer dann vorzuziehen, wenn mehr als ein Abschnitt zwischenlagefrei sein soll oder wenn dieser Abschnitt nicht am Ende des Hohlkörpers liegt. Eine weitere Möglichkeit, die Zwischenlage aufzubringen, besteht in einem Wikkeln eines Bandes des Dämmstoffes auf den inneren Hohlkörper, sei es ein- oder mehrlagig. Alternativ zum Aufweiten ist es auch möglich, den äußeren Hohlkörper in seinem Umfang zu reduzieren und diesen am inneren Hohlkörper zur Anlage kommen zu lassen. Eine solche Reduktion ist z. B. durch Ziehen oder durch Walzen möglich. Auch bei diesem Verfahren muß der Bereich des zwischenlagefreien Abschnittes zusätzlich weiter verformt werden. Als Werkstoff für den inneren bzw. äußeren Hohlkörper wird ein gut plastisch verformbarer Werkstoff gewählt, wobei aus Kostengründen beide Hohlkörper aus dem gleichen Werkstoff bestehen. Je nach Verwendungszweck kann es aber vorteilhaft sein, z. B. im Hinblick auf die Verformbarkeit des umzuformenden Hohlkörpers, die erforderliche Steifigkeit des erzeugten Doppelwandhohlkörpers, die Korrosionsbeständigkeit der Hohlkörper, unterschiedliche Werkstoffe für die miteinander zu verbindenden Hohlkörper zu wählen. Die verwendete Zwischenlage soll kostengünstig und besonders geeignet sein im Hinblick auf das Aufbringen auf den inneren Hohlkörper und einen guten Schalldämmwert aufweisen. Diese Bedingungen werden z. B. durch eine Bitumenfolie in hohem Maße erfüllt.

Das beschriebene Verfahren wird vorteilhaft zur Erzeugung einer schallgedämmten Kardanwelle angewandt, die an jedem Ende einen zwischenlagefreien Abschnitt aufweist. Damit kann ohne Schwierigkeiten an jedem Ende das entsprechende Verbindungsteil angeschweißt und das Drehmoment über den Rohrverbund übertragen werden. Im Zuge eines sich ausweitenden Nachtfahrverbotes für Nutzfahrzeuge hat die Bedeutung der Verringerung der Lärmemission zugenommen. Es sei hier nur an dieser Stelle an die Bemühungen, den Motor als Hauptschallemissionsort einzukapseln, erinnert. Bei den sonstigen Aggregaten zählt unter anderem auch die Kardanwelle zu dem ein großes Schallspektrum abstrahlenden Element. Das vorgeschlagene Doppelwandrohr ist deshalb besonders geeignet dafür Abhilfe zu schaffen, ohne daß die Funktion der Kardanwelle in irgendeiner Weise eingeschränkt werden müsste. Außerdem hat das Doppelwandrohr im Vergleich zum bisher bekannten Schmiedestück noch den Vorteil der Gewichtseinsparung.

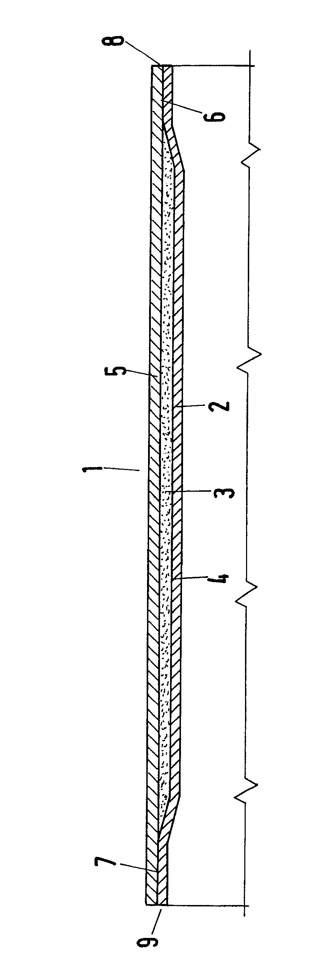

In der Zeichnung wird anhand eines Beispieles die Herstellung eines erfindungsgemäßen Doppelwandhohlkörper näher erläutert.

In der einzigen Figur ist im Querhalbschnitt eine Ausführungsform des erfindungsgemäßen Doppelwandhohlkörpers in Form eines Doppelwandrohres 1 dargestellt. Es besteht aus einem Innenrohr 2, z. B. aus Stahl St. 37, das mit einer nichtmetallischen, schalldämmenden Zwischenlage 3 belegt ist. Die Zwischenlage 3 soll in diesem Beispiel aus Bitumenfolie bestehen und eine Dicke von beispielsweise 1 mm aufweisen. Vor dem Einschieben ist die Mantelfläche 4 des Innenrohres 2 mit einem Kleber versehen und anschließend das Innenrohr 2 in die vorher auf Maß geschnittene Zwischenlage 3 eingerollt worden. Der sich dann ergebende Außendurchmesser des beschichteten Innenrohres 2 ist z. B. 1 - 3 mm geringer als der Innendurchmesser des bereits hergestellten Außenrohres 5, so daß ein leichtes Einschieben möglich ist. Die Maße der Rohre sollen hier beispielsweise für das Innenrohr 2 (50 x 1) mm und für das Außenrohr 5 (55 x 1) mm betragen. Das Außenrohr 5 soll in diesem Beispiel ebenfalls ein Stahlrohr des gleichen Werkstoffes sein. Danach werden die offenen Enden des Doppelwandrohres 1 in bekannter Weise verschlossen und das Innenrohr 2 durch ein hydraulisches Verfahren aufgeweitet. Durch das Aufweiteverfahren kommt es zu einem kraftschlüssigen Verbund des Innenrohres 2 mit dem Außenrohr 5 einschließlich mit der dazwischenliegenden Zwischenlage 3.

Bei der hydraulischen Aufweitung kann der Innendruck so festgelegt werden, daß nur das Innenrohr 2 plastisch fließt und das Außenrohr 5 nicht mit umgeformt wird. In besonders kritischen Fällen und bei schwierigen Profilquerschnitten ist es empfehlenswert das Außenrohr 5 in ein Gesenk zu legen, damit es entweder nicht oder nur bis zu dem durch die Gesenkmaße sich ergebenden Betrag mitverformt wird. Diese Verfahrensweise hätte noch den Vorteil, daß das fertige Doppelwandrohr 1 einen genau definierten äußeren Durchmesser aufweist und damit einer Kalibrierung gleichzusetzen ist.

Die Länge der auf das Innenrohr 2 aufgebrachten Zwischenlage 3 ist für das Beispiel der Kardanwelle so bemessen, daß an beiden Enden ein zwischenlagefreier Abschnitt 6,7 entsteht. An den Stirnseiten 8,9 dieser beiden Abschnitte 6,7 kann das entsprechend, hier ebenfalls nicht dargestellte Anschlußstück jeweils angeschweißt werden.

## Patentansprüche

1. Doppelwandhohlkörper mit einem inneren und äußeren Hohlkörper, die mit radialen Abstand so angeordnet sind, daß sie einen Ringraum bilden, in welchem nichtmetallisches, schalldämmendes Isoliermaterial angeordnet ist und mindestens an einem Ende des Doppelwandhohlkörpers die beiden Hohlkörper ohne Isoliermaterial direkt zur Anlage kommen,
**dadurch gekennzeichnet,**
daß der kraftschlüssig mit dem äußeren Hohlkörper (5) verbundene innere Hohlkörper (2) über den ganzen Umfang vom äußeren Hohlkörper (5) durch eine feste Zwischenlage (3) getrennt ist.

2. Doppelwandhohlkörper nach Anspruch 1,
**dadurch gekennzeichnet,**
daß die Zwischenlage (3) eine Bitumenfolie ist.

3. Doppelwandhohlkörper nach den Ansprüchen 1 und 2,
**dadurch gekennzeichnet,**
daß die Ausgangsform der Zwischenlage (3) ein Flachprodukt ist.

4. Verfahren zur Herstellung eines Doppelwandhohlkörpers nach den Ansprüchen 1 bis 3, bei dem zwei vorgefestigte Hohlkörper ineinandergeschoben werden,
**dadurch gekennzeichnet,**
daß zuerst die Zwischenlage (3) auf den inneren Hohlkörper (2) aufgebracht und anschließend dieser in den äußeren Hohlkörper (5) eingeführt und abschließend mindestens einer der beiden Hohlkörper (2,5) so stark plastisch verformt wird, daß dieser mitsamt der Zwischenlage (3) kraftschlüssig an dem anderen Hohlkörper (2,5) zur Anlage kommt.

5. Verfahren nach Anspruch 4,
dadurch gekennzeichnet,
daß die Zwischenlage (3) in Form eines Schlauches auf den inneren Hohlkörper (2) aufgezogen wird.

6. Verfahren nach Anspruch 4,
dadurch gekennzeichnet,
daß der innere Hohlkörper (2) zuerst erwärmt und anschließend in die auf Maß geschnittene Zwischenlage (3) eingerollt wird.

7. Verfahren nach Anspruch 6,
dadurch gekennzeichnet,
daß die Mantelfläche des inneren Hohlkörpers (2) zuerst mit einem Kleber versehen und anschließend in die auf Maß geschnittene Zwischenlage (3) eingerollt wird.

8. Verfahren nach Anspruch 4,
dadurch gekennzeichnet,
daß die Zwischenlage (3) mindestens einlagig auf den inneren Hohlkörper gewickelt wird.

9. Verfahren nach Anspruch 4,
dadurch gekennzeichnet,
daß der innere Hohlkörper (2) aufgeweitet wird.

10. Verfahren nach Anspruch 4,
dadurch gekennzeichnet,
daß der Außenumfang des äußeren Hohlkörpers (5) reduziert wird.

11. Verfahren nach Anspruch 9,
dadurch gekennzeichnet,
daß die Aufweitung des inneren Hohlkörpers hydraulisch erfolgt.

12. Verfahren nach Anspruch 9 oder 10,
dadurch gekennzeichnet,
daß die Aufweitung des inneren Hohlkörpers (2) bzw. die Reduktion des Außenumfanges des äußeren Hohlkörpers (5) mechanisch durch Ziehen erfolgt, wobei der zwischenlagefreie Abschnitt (6, 7) einer weiteren Aufweitung bzw. Reduktion unterworfen wird.

13. Verfahren nach Anspruch 11 oder 12,
dadurch gekennzeichnet,
daß bei der Aufweitung des inneren Hohlkörpers (2) der äußere Hohlkörper (5) sich in einem ihn umgebenden Gesenk abstützt.

14. Anwendung des Verfahrens nach einem der Ansprüche 4 bis 13 zur Erzeugung einer schallgedämmten Kardanwelle, die an jedem Ende einen zwischenlagefreien Abschnitt (6, 7) aufweist.

EP 0 441 466 A2